# FASCICULE DE BREVET EUROPEEN

(11) **EP 0 380 408 B1**
(45) Date de publication et mention de la délivrance du brevet: **23.06.1993**
(21) Numéro de dépôt: 90400195.5
(22) Date de dépôt: 24.01.1990
(51) Int. Cl.: G01B 11/24, G01B 11/02, G01N 21/90, B07C 5/12

(54) **Contrôle d'objets à forte cadence**
Kontrolle von Gegenständen mit erhöhter Aufnahmegeschwindigkeit
Control of objects at a high rate

(30) Priorité: 26.01.1989 FR 8900936
(43) Date de publication de la demande: 01.08.1990
(73) Titulaire: SAINT-GOBAIN CINEMATIQUE ET CONTROLE, 92230 Gennevilliers (FR)
(72) Inventeur: Hamel, Jean-Pierre, F-78600 Maisons-Laffitte (FR); Lamborot, Pierre, F-75019 Paris (FR)
(74) Mandataire: Le Vaguerèse, Sylvain Jacques

(56) Documents cités:
- DE-A- 3 611 536
- FR-A- 2 611 263
- US-A- 4 280 624

## Description

L'invention a trait au contrôle automatique de corps suffisamment transparents, en particulier d'articles tels que des bouteilles ou flacons en verre ou matières plastiques, à des cadences élevées, de l'ordre de 15 000 articles à l'heure et plus.

Ce contrôle s'effectue essentiellement par voie optique.

Certaines vérifications très fines ne peuvent se faire qu'à des cadences relativement basses, car il faut recourir à des émetteurs de lumière à faisceau étroit et saisir les objets un à un pour les faire tourner devant l'appareil.

De nombreuses autres ne réclament pas un examen aussi soigné mais, pour des raisons de sécurité, il faut contrôler la totalité des articles, donc opérer à des cadences extrêmement rapides. On préfère alors, au moins dans un premier stade, les observer au vol, sans contact, en limitant les vérifications à celles des défauts les plus gênants, qui se trouvent être les plus visibles, à savoir déformations, défauts majeurs tels que fractures ou fortes glaçures survenues à la suite de chocs thermiques ou de manutentions et susceptibles de provoquer des casses sur la chaîne, opacités attribuables à la présence de pierres ou bouillons relativement importants, "trapèzes" dangereux pour l'utilisateur...

Ainsi, les contrôles s'effectuent couramment comme des contrôles visuels, par observation directe en transparence sur un fond clair, les défauts créant des taches plus ou moins lumineuses qui viennent s'inscrire à l'intérieur d'une image plus uniforme dont le contour assombri dessine le profil de l'objet, ou même altérer ce profil s'il s'agit d'un article brisé ou déformé.

Les articles, distribués à l'intervalle minimal acceptable par un moyen espaceur convenable sont entraînés par un convoyeur à tablier horizontal, alignés sur une file, devant l'appareil, dont chaque émetteur de lumière peut se réduire à un simple écran fournissant un fond lumineux. En face de celui-ci se trouvent des systèmes optiques récepteurs fixes comprenant une caméra électronique à faible temps de réponse ; son objectif forme une image réelle instantanée de l'objet sur une surface photosensible dont l'exploration électronique, effectuée rangée par rangée, transpose cette image en un train de signaux électriques quantifiés. L'analyse de ces derniers selon un mode opératoire convenable permet à la fois de détecter des anomalies isolées et d'obtenir à partir du contour de l'objet des mesures dimensionnelles. On peut ainsi caractériser la nature et l'importance des défauts et, le cas échéant, écarter l'article.

Les bords de l'image apparaissant plus sombres et perturbés, des défauts locaux ne pourront être détectés que dans la zone centrale claire, zone d'autant plus étroite que la paroi est plus épaisse par rapport au diamètre, c'est-à-dire sur 40 à 50 ° seulement de part et d'autre de l'axe, et non dans les zones marginales ; ceci signifie qu'il faut généralement recourir à deux détections croisées à 90 ° ou même à trois détections effectuées à 60 ° : si les dispositifs sont au nombre de trois, une rotation au moins de l'article est nécessaire entre deux des contrôles, car on ne peut se placer trop obliquement par rapport à l'axe du convoyeur.

Un tel dispositif, lisant l'image ligne par ligne, est décrit en particulier par la publication FR-A-2 405 760.

Compte tenu de la forme variable des articles à contrôler, l'obtention d'une image globale de finesse réellement satisfaisante exigerait que chacune des caméras possédât un minimum de l'ordre de 40.000 pixels, de sensibilités égales ou du moins très semblables.

La solution est donc coûteuse à la fois en investissements initiaux et par une multiplication des défaillances qui conduit à une fréquence relativement élevée de remplacement des matrices photosensibles.

On préfère employer une caméra à réseau linéaire, c'est-à-dire réduire la surface sensible à une simple barrette ou chaîne de diodes disposées sous forme d'une unique colonne verticale, susceptible de comprendre par exemple 2⁸ = 256 diodes ou 2⁹ = 512 diodes, l'examen complet de l'objet étant provoqué par son défilement sur le convoyeur devant l'appareil, les tranches verticales successives de cet objet venant tour à tour former leur image sur la rangée de diodes. Une exploration électronique verticale très rapide s'associe alors spontanément à un balayage horizontal plus lent ; la finesse de la trame verticale, c'est-à-dire l'espacement des colonnes d'analyse engendrées par les lectures successives est fonction de la vitesse de défilement, elle-même directement liée à la cadence. La voie la plus simple est de déplacer l'objet sur un convoyeur en translation rectiligne uni forme et de l'observer perpendiculairement dans un plan fixe.

Un inconvénient notable est que l'essentiel des mesures de dimensions ne peuvent se lire qu'au bout d'un balayage complet de l'image dont la durée, très brève puisque qu'inférieure à la période de passage, correspond cependant à un déplacement suffisant pour que leur précision souffre de perturbations d'origine mécanique (vibrations, écarts de vitesse du convoyeur, glissements), et optique ou même électrique (ombres, variations d'intensité lumineuse...).

Reposant sur la réflexion que ces mesures, notamment les mesures de diamètres qui exigent la meilleure précision, ne se font pas dans d'excellentes conditions, l'invention se fixe au contraire pour objectif d'effectuer selon la direction de déplacement sur l'image, ligne après ligne, l'exploration électronique rapide qui provoque sur le récepteur acquisition et lecture, en l'assortissant d'un balayage transversal complémentaire, ce qui revient en somme à rendre le balayage indépendant du mouvement créé par le transporteur.

Elle propose donc au premier chef d'employer un dispositif dont le récepteur, équipé d'une caméra linéaire, combinera avec l'objectif de celle-ci un réseau de cellules photoélectriques disposé"horizontalement" c'est-à-dire de façon à observer l'objet par tranches d'exploration pratiquement parallèles à la direction du mouvement créé par le convoyeur ou le transporteur avec un système optique complétant l'examen par un mouvement transversal de balayage "vertical" couvrant une part notable et normalement majeure de la période de passage.

Dans la mesure où l'article se déplace en translation, en particulier à vitesse uniforme sur un convoyeur rectiligne ce qui, à grande cadence, a l'avantage d'éviter les à-coups, il convient al ors de remarquer que le mouvement horizontal de l'objet produit au cours de la mesure un glissement progressif de l'image qui oblige à donner à l'appareil un champ horizontal supérieur à la largeur de cet objet, diminuant par rapport au nombre total de cellules le nombre de celles disponibles en face de lui à un moment donné pour constituer les colonnes, c'est-à-dire la chaîne verticale. Mais en pratique et grâce à la rapidité de fonctionnement des circuits désormais disponibles dans le commerce, ceci ne constitue pas un handicap, même à des cadences très élevées. En compensation, au prix certes d'une complexité accrue, on obtient au contraire une succession d'explorations horizontales quasi instantanées, ce qui élimine à peu près totalement les inconvénients des perturbations signalées plus haut.

De préférence, selon une caractéristique secondaire importante, le balayage vertical sera commandé selon un programme déterminé d'avance par l'opérateur ou même correctible, et déclenché par le passage même des articles. Une telle solution présente l'avantage d'une grande souplesse : il devient possible d'adapter le cycle opératoire à l'article et d'examiner des zones différentes de celui-ci à des vitesses c'est-à-dire selon des trames différentes en fonction des besoins.

Il est à remarquer que le procédé d'examen indiqué conserve la majeure partie de ses avantages, si ce n'est celui du coût, si on le met en oeuvre par voie électronique sur une camera à réseau rectangulaire. Un dispositif correspondant rentre donc aussi dans le cadre de l'invention.

D'autres caractéristiques et divers avantages de l'invention ressortiront de la description détaillée donnée ci-dessous d'une version avantageuse, en référence aux dessins, qui montrent :
- figure 1 : une vue en perspective d'une machine de contrôle, de bouteilles selon l'invention,
- figure 2 : le schéma d'un poste, en élévation transversale,
- figure 3 : le schéma en plan de ce même poste,
- figure 4 : le schéma du passage de bouteilles successives dans le champ du récepteur,
- figure 5 : le schéma du cycle de contrôle, en synchronisme avec l'avance d'une bouteille,
- figure 6 : l'image électronique obtenue,
- figure 7 : le schéma électronique de la machine.

Chaque poste de contrôle conforme à cet exemple associe à un convoyeur un émetteur de lumière créant un fond lumineux et un récepteur à réseau linéaire à balayage transversal mécanique situés de part et d'autre de la piste de ce transporteur, pour examiner les articles par transparence, espacés mais sans qu'il y ait à les mettre en rotation au cours de leur inspection.

Les signaux fournis sont transformés par chaque récepteur en données utilisables pour établir ensuite informations et statistiques transmises aux postes de fabrication. En premier lieu et de façon classique l'appareil commande en amont un distributeur d'articles, en aval une trieuse ; celle-ci peut comprendre au besoin un marqueur signalant les articles reconnus défectueux, plus généralement un éjecteur écartant ceux-ci de la ligne.

De façon à fournir plusieurs examens complémentaires, une machine comprendra généralement plusieurs postes. Avantageusement, son ensemble sera géré par un microordinateur.

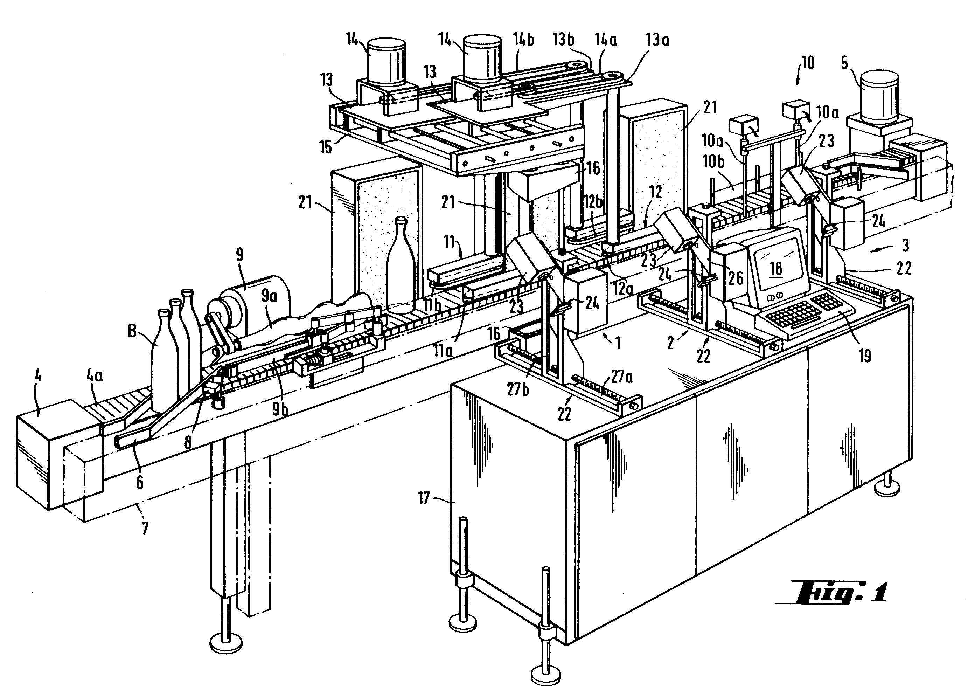

La machine de la figure 1 est triple : elle comprend côte à côte trois postes de contrôle 1, 2, 3, de structure identique, disposés le long d'un convoyeur rectiligne 4, à palettes coulissantes, de précision suffisante, sur lequel les articles à contrôler, des bouteilles B, sont posés debout ; ce convoyeur est apte à les faire défiler d'un mouvement continu, à espacement constant, pour permettre de les prendre en compte un par un au moment du contrôle, son tablier leur fournissant une assise horizontale de référence aussi parfaite que possible. Des solutions plus complexes peuvent être envisagées mais l'un des avantages de la machine selon l'invention réside précisément dans la simplicité et la souplesse d'emploi d'un tel convoyeur.

Le moteur 5 permet d'entraîner le convoyeur à vitesse uniforme mais réglable. En amont, un aiguillage 6 prélèvera les articles à contrôler sur le convoyeur principal 7 et un vérin de blocage 8 autorisera ou non leur passage dans la machine un espaceur 9 les distribuera régulièrement alignés sur le convoyeur entre sa vis 9a et son contre-guide 9b. En aval, un éjecteur 10, montré sous forme d'un jeu de deux soufflettes 10a associées à deux goulottes 10b, éliminera en les triant les articles défectueux.

Les postes 1, 2 et 3, orientés tous trois perpendiculairement à la direction du convoyeur, sont séparés par deux rotateurs à courroies 11 et 12, de modèle classique, qui, sans changer l'alignement des articles, font chacun effectuer à ceux-ci un tiers de tour ; la raison en sera précisée plus loin. Les trains de courroies antagonistes 11a et 12a d'une part, 11b et 12b d'autre part sont respectivement suspendus à l'un et l'autre des deux chariots 13 sur des potences 13a, 13b, et couplés à chacun des deux moteurs 14 par des courroies crantées 14a, 14b. Les chariots 13 coulissent sur une console à glissières 15, elle-même réglable en hauteur sur une colonne 16. L'armoire 17 alimente l'appareillage ; elle renferme le microordinateur qui pilote les commandes de tous ces organes et porte sa console d'écran 18 et son clavier 19.

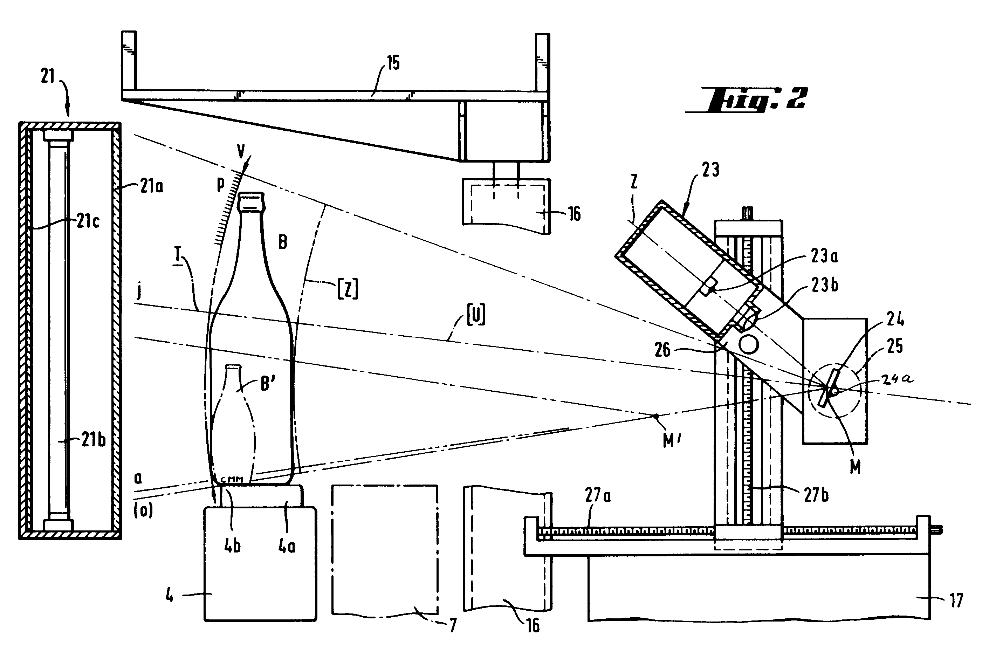

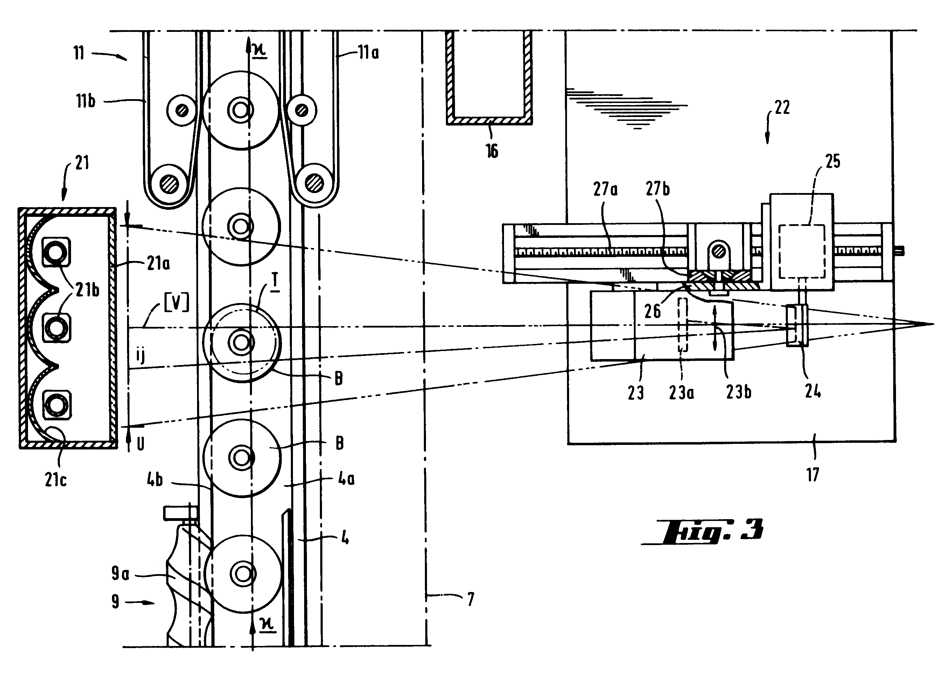

Les figures 2 et 3 font apparaître de façon plus précise la disposition d'un poste de contrôle, le poste 1 par exemple. A l'arrière se trouve l'émetteur 21, essentiellement constitué d'un écran plan et rectangulaire 21a disposé verticalement le long d'un bord du convoyeur ; recourir à une forme cintrée n'est pas interdit mais la version ci-dessus est plus souple d'emploi et répond à la quasi-totalité des besoins. Cet écran sera de dimensions suffisantes pour couvrir tout le champ utile de vision du récepteur : en pratique, comme on le verra plus loin, il possédera une hauteur supérieure à celle du plus grand des articles à contrôler et une largeur de l'ordre du triple de la largeur apparente du plus fort.

L'écran choisi est translucide et éclairé sur sa face arrière par une boîte à lumière de type classique, schématisée sous la forme d'une série de tubes verticaux 21b associés à une optique 21c ; cette solution est la plus apte à fournir une luminosité uniforme dans l'espace et dans le temps.

A l'avant, de l'autre côté du convoyeur 4, face au fond lumineux créé par l'écran 21a, est placé le récepteur 22, constitué d'une caméra 23 à réseau linéaire associée à un miroir de renvoi pivotant 24 ; montée par commodité au dessus de celui-ci, la caméra est mise au point de façon à former par son intermédiaire une image des bouteilles dans le plan de la barrette de diodes photosensibles 23a qui constitue le réseau linéaire de cellules réceptrices.

L'ensemble du système optique du poste 2 possède un plan de symétrie [V] perpendiculaire à la direction x du convoyeur : alors que l'axe optique z de l'objectif 23b de la caméra est contenu dans ce plan, l'arbre 24a du miroir comme la barrette de diodes 23a sont horizontaux et, comme l'écran de l'émetteur 21, parallèles à cette direction x. Dans une position M et pour un angle de site donnée, le miroir définit donc avec la barrette, à travers l'objectif, un plan d'observation [U] parallèle à la direction du convoyeur et, sur chaque objet, une section T, indépendante de la position de cet objet sur le trajet commun et que toute lecture de la barrette de diodes permettra d'explorer.

Une rotation du miroir 24 déplacera verticalement l'image devant la barrette de diodes ou, si l'on préfère, permettra de balayer avec cette dernière, sur le fond clair fourni par l'émetteur 21, un champ rectangulaire global couvrant par bandes successives les zones à examiner. L'examen résulte non plus du déplacement de l'objet dans la direction x mais de ce balayage optique transversal selon un axe de coordonnées complémentaire v.

Bien que d'autres types d'organes de déviation du faisceau lumineux puissent être envisagés, un balayage mécanique par un miroir plan constitue la voie la plus simple et la plus commode pour les réglages.

Ce miroir est construit rigide mais aussi léger que possible pour n'avoir qu'une faible inertie. Son débattement pourra atteindre une vingtaine voire une trentaine de degrés. Son arbre 24a est mû par un mécanisme programmable : il s'agit avantageusement d'un moteur 25 soumis à une commande de position, en particulier d'un galvanomètre à cadre mobile alimenté en courant, sous une tension réglable qui détermine une échelle au pas d'écart angulaire p, à partir d'un diviseur de tension à commande numérique fournissant sur cette échelle, à la maille verticale désirée, un éventail d'ordonnées vj de lignes j ; une boucle de contre-réaction permet d'obtenir un amortissement critique et d'atteindre ainsi des temps de réponse de l'ordre de 2 à 3 millisecondes.

Il devient alors possible d'engendrer des lois diverses de balayage mécanique, traduites par des courbes de site v en fonction du temps, donc aussi de hauteur angulaire y sur un repère lié à l'article, ayant des formes variables : on pourra en particulier créer à des hauteurs données des paliers d'attente ou de mesure, commander les déplacements selon des mailles verticales différentes d'un secteur à l'autre pour serrer plus ou moins la trame horizontale d'examen et en particulier franchir de façon quasi instantanée des zones inintéressantes, par exemple celles qui présentent des perturbations systématiques liées à l'existence d'un décor de nature à rendre la détection inexploitable ou celles qui ne sont pas susceptibles de révéler des défauts gênants. On sera donc à même d'examiner les articles par tranches successives selon un programme répétitif déterminé par l'opérateur voire, dans la mesure du temps disponible de modifier le programme d'examen lors de l'apparition d'un défaut pour étudier celui-ci avec plus de finesse, comme le ferait l'observateur humain.

Le récepteur est monté sur un chariot à glissières croisées 27a et 27b, mobile le long du plan de symétrie [V] perpendiculaire au convoyeur 4 ; conjugué le cas échéant avec un changement d'objectif et à la limite une rotation du support du miroir, ce montage permet d'ajuster la visée de l'appareil en fonction des besoins, et en particulier des dimensions des articles, passant par exemple de M pour les bouteilles B à M' pour les bouteilles B'.

La zone [Z] de stigmatisme engendrée par la rotation du miroir 24 étant cylindrique, le diaphragme de visée du récepteur, constitué en l'occurrence par le miroir lui-même, est le plus souvent placé environ à mi-hauteur de l'article à contrôler, position la plus favorable à la netteté de l'image, compte tenu de la profondeur de champ limitée que peut exiger la recherche d'une grande sensibilité ; s'agissant notamment d'une bouteille, un réglage différent peut au contraire, dans certains cas, permettre une observation peu oblique de la bague ou du talon.

Les deux parois étant vues à la fois par transparence en lumière diffuse, la mise au point se fait avantageusement quelque peu en avant de la face arrière, de façon à équilibrer la netteté de l'image.

La figure 2 montre aussi que, transversalement, toute bouteille B ou B' doit venir en position fixe près du bord arrière 4b du convoyeur, pour se placer dans l'éventail vertical de visée V de façon déterminée et le mieux possible vers le bas : le guidage nécessaire est fourni par l'espaceur. Toutefois la zone d'écriture située sur le pourtour du talon et le cas échéant le fond piqué interdisent l'observation en dessous d'une hauteur a qui constituera la limite basse d'examen. L'opérateur ajustera l'éventail vertical, avec la marge de sécurité voulue, par le choix des adresses extrêmes de la commande de pivotement.

Convoyeur arrêté, l'appareil pourra ainsi, en particulier lors des étalonnages, inspecter et mesurer, par lignes entières, une mire ou un article immobile de largeur apparente d. Il est cependant destiné à permettre le contrôle au vol, sur le convoyeur en mouvement, pendant qu'à vitesse constante les articles passent transversalement entre l'émetteur à fond lumineux 21 et le récepteur 22, comme le montrent les figures 1 à 3, et ceci à cadence élevée.

Sur chaque récepteur, la rangée de cellules peut être lue et analysée toutes les 150 à 250 µsec environ pour former une ligne d'image correspondant à la bande observée, après un temps d'exposition pris très proche de cette période de lecture de façon à fournir le maximum de signal. Ce temps sera suffisamment bref pour que chaque exploration puisse être considérée comme instantanée en première approximation, c'est-à-dire que l'image reste nette. Une phase d'examen de 400 à 1000 explorations de lignes (distinctes ou confondues) peut ainsi être effectuée en 0,1 à 0,2 sec environ, ce qui, dans la mesure où le traitement de l'information reste possible en temps réel, permet d'atteindre des cadences de contrôle pratiques de 20 000 à 30 000 articles à l'heure.

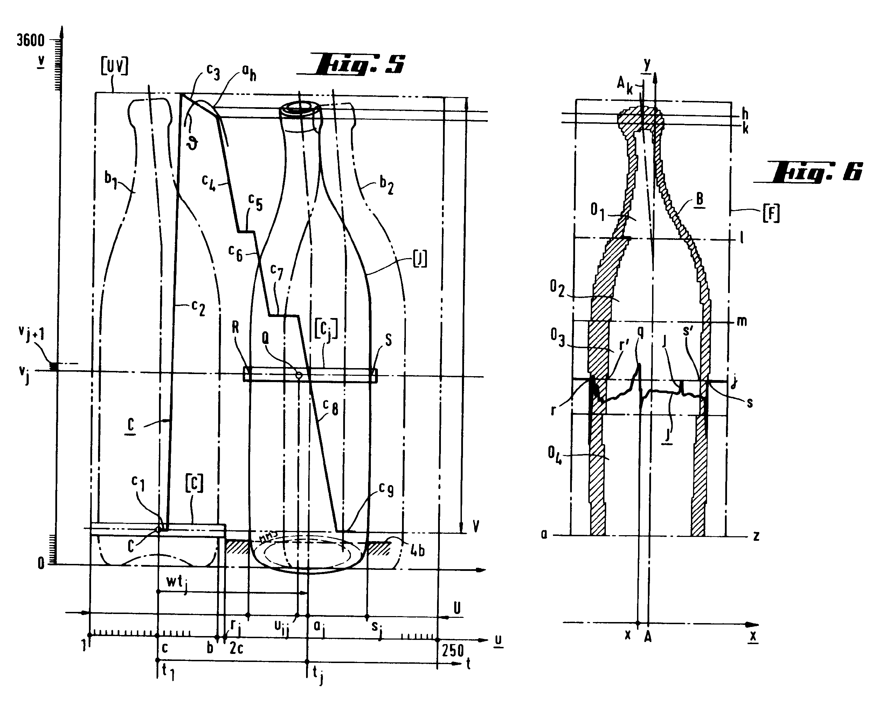

Un article en mouvement se présente par son bord aval sur un coté du champ du récepteur pour disparaître ensuite à l'extrémité opposée. Au cours de l'examen, que le miroir soit arrêté ou non, l'Image de la tranche observée le long de la section T défile donc horizontalement devant les cellules ; son glissement g est proportionnel à la durée de la phase d'examen et à la vitesse w du convoyeur. Or il y a encore lieu de n'opérer que par lignes entières pour éviter de compliquer à l'excès le traitement du signal et surtout pour profiter pleinement des avantages de l'invention : comme le montre la figure 4, ceci oblige à élargir le champ horizontal utile U de d à d + g entre une position initiale b₁ et une position finale b₂ et, à moins d'augmenter corrélativement le nombre de diodes de la barrette, à réduire en proportion la définition de l'Image donc la finesse d'analyse.

Il est donc souhaitable que la vitesse du convoyeur reste aussi faible que possible, non seulement pour minimiser les effets des imperfections mécaniques et augmenter la netteté intrinsèque de l'image mais aussi pour sauvegarder une finesse d'analyse suffisante. Or, si le contrôle se fait à une cadence régulière donnée, les articles défilent à espacement en principe constant, séparés par un intervalle apparent e : plus cette cadence est élevée, moins on peut donc augmenter l'intervalle e.

D'autre part, pour atteindre la cadence maximale de contrôle possible, il faut rapprocher la période de passage des articles sur le convoyeur de la durée intrinsèque du cycle de contrôle ; dans ces conditions, on ne peut pratiquement pas éviter que le champ morde au moins périodiquement sur deux articles à la fois, ce phénomène apparaissant dès que le glissement g excède l'intervalle e : vouloir opérer autrement pénaliserait trop la cadence.

Cette présence simultanée de plusieurs articles dans le champ horizontal, alors qu'il y a lieu de les examiner un par un, engendre une difficulté qui sera résolue par la création d'un créneau d'examen accompagnant tour à tour chacun des articles.

Le glissement peut alors s'approcher du pas d + e de défilement des articles et le champ nécessaire de U = d + g = 2d + e. Toutefois, bien que l'exposition, sa lecture puis le traitement de l'information s'effectuent en parallèle, et pour tenir compte des temps de transfert mais surtout des imprécisions d'espacement, il convient d'impartir à la phase d'examen, qui requiert au minimum un aller et retour du miroir à partir de sa position de référence une durée un peu raccourcie par rapport au temps minimal normalement observable entre deux passages.

Ainsi on ne peut guère, à l'entrée du convoyeur, se contenter de placer une simple file d'attente assortie d'un verrou : il est nécessaire d'utiliser un espaceur tel qu'une roue ou mieux la vis distributrice représentée sur les figures.

Même alors, et pour éviter tout risque d'interférence entre examens successifs, l'intervalle théorique e ne pourra descendre très en dessous de la moitié de la largeur apparente d des articles, donc en général d'un demi-diamètre, et ceci dans la mesure où la vision du récepteur est perpendiculaire.

En résumé, pouvant simultanément embrasser en entier deux articles, le champ horizontal U du récepteur couvrira alors une largeur proche de 2,5 d. Un article d'ordre n restera entièrement visible jusqu'au moment où il aura pris sensiblement la place qu'occupait à son entrée dans la fenêtre de vision l'article d'ordre n - 1 et qu'il sera lui-même remplacé par l'article d'ordre n + 1 ; il pourra donc, sur presqu'une période c'est-à-dire la totalité du temps disponible, être examiné par lignes entières.

Toutefois, là où par exemple une rangée de 250 cellules utiles, disposée verticalement, analysait une bouteille sur 100 colonnes, la même rangée, disposée horizontalement, devra analyser cette bouteille sur 250 lignes, tandis que 100 cellules seulement pourront à chaque instant saisir sa plus grande largeur ; ainsi la complexité accrue du dispositif s'accompagne de la nécessité d'augmenter sa vitesse de lecture. Les données fournies plus haut permettent de se rendre compte que les performances des matériels actuels autorisent à considérer cet inconvénient comme secondaire compte tenu de ce que la quantité globale d'informations à traiter reste inchangée.

Mais le mode choisi de commande du mouvement du miroir permet de déclencher tout balayage donc tout cycle de contrôle à partir d'une position initiale de ce miroir prise librement et au passage d'un article dans une position déterminée, en l'occurrence située toute entière à l'intérieur du champ : une telle solution est à la fois plus souple, plus commode et plus précise que celle qui consisterait au contraire à vouloir employer un miroir de fonctionnement entièrement périodique en cherchant à synchroniser sur son mouvement le passage des articles.

Pour déclencher le cycle de contrôle, la voie la plus simple et de loin la plus avantageuse consiste à surveiller le franchissement, par le bord aval des articles successifs, d'un détecteur visant une hauteur donnée ; celle-ci sera prise de préférence proche du tablier du convoyeur pour que, même cassés ou renversés, l'appareil repère le passage de ces articles avec certitude, évitant ainsi tout incident. Si l'on prend pour position de départ et de référence du mouvement du miroir une telle position basse, on pourra employer à la surveillance une cellule choisie de la barrette de diodes.

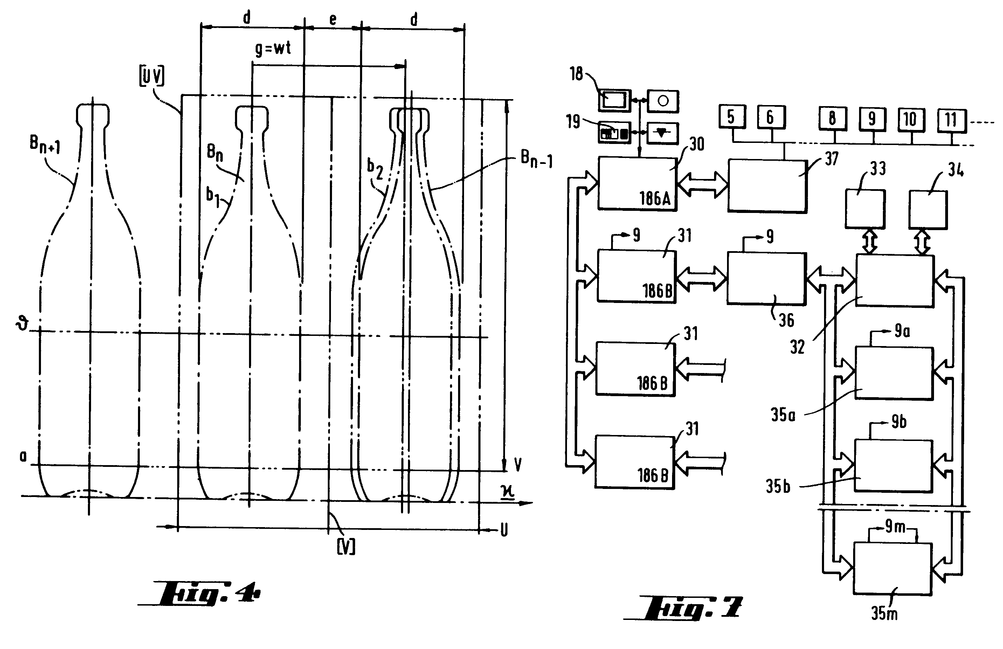

La figure 5 illustre le déroulement d'un tel processus. Le miroir, en début de cycle, se trouve en attente dans la position basse qui lui a été assignée en fonction des réglages optiques, la zone vue par le dispositif formant initialement une étroite bande horizontale.

De façon classique, les impulsions émises par une horloge de synchronisation provoquent la lecture cellule après cellule, à intervalles de temps déterminés, des tensions recueillies sur les 250 photodiodes, dont les dimensions définissent tant l'épaisseur de la tranche observée que la maille horizontale de la chaîne d'analyse sur chaque ligne j. Comparé aux seuils d'étalonnage, le signal vidéo engendré par chaque lecture de la barrette est ensuite transformé, ligne par ligne, en un signal numérique envoyé vers une position de mémoire tampon à l'adresse de la ligne intéressée, pour être ensuite exploité c'est-à-dire traduit en données utilisables. Cette première acquisition s'effectue en permanence.

En l'absence de tout masque devant l'écran le signal est plat et supérieur aux seuils donc considéré comme nul. Mais défilant sur le convoyeur, un objet qui entre dans la fenêtre de vision de la caméra provoque sur les photodiodes des variations d'intensité lumineuse qui engendrent une série de signaux détectables. Au cours des étapes successives d'examen, l'avance de cet objet, déplaçant l'image devant les cellules, fait progresser les signaux successifs à l'intérieur de la mémoire. C'est dans le même sens, représenté conventionnellement de gauche à droite sur les figures, qu'est décompté le rang i de chacune des diodes et que de proche en proche s'effectue l'exploration.

Une diode b de la barrette est choisie pour servir de barrière en vue de détecter la pleine arrivée de l'article, avec une légère marge de sécurité, dans le champ global : dès qu'elle est atteinte par le bord aval de l'image, le signal émis déclenche le programme d'exploitation.

A cet instant initial (instant t₁) est créé entre la cellule 1 et une cellule 2c un créneau d'examen [C] de largeur 2c encadrant avec cette même marge un segment correspondant à la largeur maximale d de la bouteille et neutralisant toutes les cellules extérieures. Aussitôt seront lancés le cycle de commande du moteur engendrant le balayage vertical du champ par le miroir et, la vitesse w du convoyeur étant supposée constante et connue, le glissement du créneau [C] devant les diodes, cellule par cellule, à la même vitesse moyenne, de façon à interdire que tout autre article vienne interférer avec l'examen en cours.

La figure 5 montre donc le schéma du mode de balayage adopté. Le temps ou encore l'avance du convoyeur et le déplacement synchrone c + wt du milieu C du créneau [C] y sont portés en abscisses en regard de la chaîne des diodes et le site v du plan d'observation [U] en ordonnées en regard de l'échelle de balayage. La courbe C figure ainsi, à l'intérieur du champ global du récepteur, le déplacement du champ observé et sa visée sur la bouteille ; elle illustre donc aussi la variation de la trame horizontale d'examen.

Pour la simplicité de l'exposé, la courbe représentée ici est schématique ; en pratique il faudra, pour établir le programme de balayage, tenir compte du décalage provoqué par l'inertie du miroir entre la courbe réelle et le tracé défini par la succession des ordonnées vj inscrites en regard des adresses j des lignes successives.

La caméra examinera une à une, en les balayant ligne par ligne comme il vient d'être dit, avec d'ailleurs un certain effet de parallaxe, les images cernées d'ombre fournies par les bouteilles au fur et à mesure de leur passage dans le champ de l'appareil : la figure donne encore une représentation schématique [J] de l'une d'elles à un instant tⱼ.

Or, sur la durée d'une exploration de ligne donc aussi d'une ligne à l'autre de la trame de balayage, le glissement horizontal de l'image n'atteint pas le quart de la maille de la chaîne ; à partir des valeurs numérisées de l'affaiblissement de l'intensité lumineuse successivement stockées dans la mémoire tampon il sera donc possible, dans le cadre du programme d'extraire, à l'intérieur du créneau [Cⱼ], non seulement des écarts significatifs d'anomalies q évocatrices de défauts Q, ainsi que leurs abscisses uᵢⱼ, mais aussi celles rⱼ, sⱼ des transitions extrêmes R, S en considérant ces données comme obtenues à un même instant tⱼ. Ceci permet de calculer à partir des données de lecture de la mémoire tampon diamètre : dⱼ = sⱼ - rⱼ et position de l'axe : 2 aj = sj + rj.

Au cours des diverses étapes de l'opération, il conviendra cependant que l'on puisse aussi négliger le glissement vertical et l'obliquité prise par chaque bande observée sous l'effet de la rotation du miroir : en pratique, dans les étapes de recherche des défauts, la maille de la trame devra rester du même ordre que celle de la chaîne précitée ou que l'épaisseur de la bande observée, et de préférence inférieure.

La courbe C présente une portion très ascendante, puis plusieurs descendantes de pente moins accentuée, reliant un certain nombre de paliers. La portion ascendante est trop verticale pour pouvoir servir à un examen ; on en comprendra ci-dessous la raison. Le balayage à proprement parler ne s'effectue qu'au retour ; les descentes sont essentiellement consacrées à la recherche des défauts et les paliers à des mesures de dimensions : ils permettent en effet de lier les relevés instantanés à des sites angulaires précis v = vⱼ en supprimant obliquité et surtout décalage de l'exploration ou tout au moins en les rendant négligeables ; mais on peut en outre y effectuer la moyenne de plusieurs de ces mesures pour augmenter la précision en profitant de ce que, de l'une à l'autre, le glissement de l'image correspond à une fraction seulement de la maille définie par la disposition des cellules, et même obtenir un effet de vernier si on fait correspondre le glissement global au cours de l'ensemble de ces mesures à un nombre déterminé de mailles de la chaîne. En pratique on peut d'ailleurs souvent se contenter d'un faux-palier.

On peut enfin reconstituer progressivement en mémoire une image B droite sinon instantanée de chaque bouteille, en inscrivant les anomalies caractéristiques en regard de coordonnées corrigées :
- de lignes y, hauteur effective sur l'article déduite de v ou de vⱼ au décalage près,
- et de colonnes x = uᵢⱼ - wtⱼ, en particulier Aⱼ = aⱼ - wtⱼ,
   rapportées à un instant de référence 0, tel par exemple que Aₐ = A, valeur librement choisie, c'est-à-dire en faisant glisser les adresses affectées aux cellules,

pour redresser le champ dessiné par le créneau mobile [C] en une grille d'analyse [F] rectangulaire liée au mouvement de l'article.

La courbe C possède ainsi, à l'adresse a des premières lignes, un palier c₁ assez bref, lu par les cellules de tête comme on le voit sur la figure ; il sert à confirmer au début de l'opération la présence effective d'un objet de la dimension voulue, à déterminer la position aₐ de l'axe à hauteur du talon et à lancer la suite du programme.

Si la rapidité de la montée c₂ rend celle-ci aveugle, elle permet de venir immédiatement observer la partie haute du champ : le programme y vérifie d'abord, par la disparition du signal, que la visée se fait au dessus de la bouteille. Pour franchir le sommet de celle-ci à vitesse minimale, il déclenche ensuite une descente lente c₃, caractérisée par le fait que les écarts entre adresses successives de lignes sont égaux au pas p du galvanomètre, ce qui donne à la trame une maille inférieure au glissement horizontal de chaque ligne. Le calcul des diamètres successifs permet alors de localiser le sommet, donc de connaître la hauteur h : on peut se référer par exemple soit au premier diamètre supérieur à un seuil donné, les ¾ de la valeur nominale par exemple plutôt que la première valeur non nulle, soit au premier écart de diamètres jugé assez faible, une seule maille de chaîne sur plusieurs lignes successives par exemple.

On peut enfin mesurer dₖ, diamètre de la bague, voire enregistrer le profil de celle-ci, et calculer aₖ, position correspondante de l'axe. L'écart Aₖ - A caractérise alors un défaut global de verticalité, la brièveté du temps qui sépare les deux mesures aₐ et aₖ minimisant les erreurs d'origine mécanique.

Moins lente, la suite de la descente du miroir est coupée en trois tronçons c₄, c₆, c₈ par deux paliers c₅ et c₇. Le premier palier correspond à une nouvelle mesure A₁ de la position de l'axe, l'écart A₁ - Aₖ caractérisant un col penché ; le second fournit la mesure dₘ du diamètre maximal donc sa comparaison au diamètre nominal d. Enfin un dernier palier c₉ observé en position basse correspond au retour du miroir à sa position de référence. Il permet d'effectuer au moyen des cellules de queue, celles placées en aval de la barrette, une dernière mesure A_{z} de la position de l'axe : le cumul périodique des écarts A_{z} -Aₐ traduit l'écart entre la vitesse réelle du convoyeur et sa vitesse nominale w ; il peut donc être utilisé pour rectifier cette valeur de consigne.

Le long des trois tronçons c₄, c₆, c₈ le programme de descente du miroir fournit ici une maille de balayage constante, égale à 4 p, donc encore un peu inférieure à celle de la chaîne, elle-même de l'ordre du mm.

Le miroir, revenu à sa position basse de départ en face de la ligne a, le récepteur retourne à son état initial mais en plaçant aussitôt le créneau [C] à son emplacement de départ. Il se trouve ainsi prêt à effectuer un nouveau cycle de contrôle malgré la présence de la première bouteille dans la partie droite du champ ; ce cycle démarre dès que la barrière b en donne l'autorisation, c'est-à-dire que la bouteille suivante se présente en position voulue ; ceci se produit après un glissement correspondant à un temps mort variable, utilisable par l'ordinateur pour finir de traiter l'ensemble de l'image fournie par la première.

Il est clair que les relevés obtenus ne fournissent que des valeurs relatives qu'il faut traduire par référence à des gabarits et étalons tels que des bouteilles jugées bonnes ou au contraire porteuses d'un défaut donné. L'affichage des limites et des valeurs réelles résulte donc d'un apprentissage qui peut être manuel ou automatique ; il s'agit d'opérations classiques qu'il est inutile de décrire ici.

Il est clair aussi que toute partie de la paroi d'articles tels que des bouteilles n'est pas vue dans les mêmes conditions : l'ombre qui borde leur image, et qui peut être traversée de reflets, traduit un accroissement progressif d'obliquité et d'épaisseur de verre traversée. Elle est d'autant plus large et sombre que la paroi est plus épaisse et que le verre est plus foncé pour la lumière utilisée : en pratique elle ne permet de détecter les défauts que sur 60 à 80 % au plus de la largeur de l'image.

La détection n'affecte que le tiers ou le quart environ de la périphérie à l'arrière comme à l'avant de la bouteille, raison pour laquelle un contrôle complet exige en principe deux et plus souvent trois passages sous des angles de présentation complémentaires. C'est ce qui conduit à prévoir trois postes successifs semblables sinon nécessairement identiques : bien entendu ces trois postes travaillent indépendamment ou du moins en parallèle, au besoin selon des visées ou des cycles différents ; seules distribution des instructions, comptabilisation des défauts et commande éventuelle d'éjection sont fusionnées.

Il est à noter que s'il est alors concevable de placer en biais par rapport au convoyeur les plans de symétrie verticaux de deux des récepteurs, cette solution ne dispense pas de toute rotation de l'article et présente toute une série de graves inconvénients, surtout pour le traitement de l'image ; c'est pourquoi elle n'a pas été retenue ici.

De même une rupture de symétrie provoquée par une disposition interne oblique de certains des organes d'un récepteur pourrait en théorie compenser par exemple le glissement de l'image au cours de l'examen mais les inconvénients de ce genre de solutions, en particulier leur complication et leur manque de souplesse excèdent en fait leurs avantages.

Par contre l'incorporation d'optiques auxiliaires au récepteur peut permettre de subdiviser le champ de vision de celui-ci pour observer sous des angles indépendants les diverses zones de chaque article, notamment en fonction de leur niveau. On emploiera en particulier des jeux de miroirs répartiteurs parallèles à la direction du convoyeur, semblables à ceux que, dans un autre type d'appareil, la publication de brevet FR-A-2 558 259 place sur l'émetteur.

On pourrait même à la limite employer le miroir de poursuite d'axe vertical que décrit cette publication, ou encore faire tourner les articles en continu devant les récepteurs : sans dispenser d'une triple inspection, ceci rendrait la machine plus compacte en permettant d'en resserrer les postes, mais ce serait aux dépens de sa précision.

Enfin il convient de remarquer que, sur chaque poste, il n'est pas impossible de traiter par lots de petits objets ni inversement, sur des articles épais ou colorés, d'effectuer deux allers et retours du miroir pour obtenir dans chaque plan d'observation deux angles de visée complémentaires, décalés de la moitié du champ afin d'élargir la plage utile de recherche des défauts.

La forme du signal J fourni par l'intensité lumineuse reçue sur une ligne j est retracée sur la figure 6.

En vue de la recherche des défauts et à l'intérieur de l'image donc du segment rs, le programme de contrôle engendre une série de traitements distincts :
- dans les étapes muettes ou correspondant aux mesures dimensionnelles, il élimine en principe purement et simplement cette recherche des défauts ;
- sur chaque autre ligne, il efface systématiquement les données fournies par des nombres choisis de cellules extrêmes, celles qui correspondent aux zones marginales perturbées.

La succession des segments conservés r's' forme une série de plages 0₁, 0₂, 0₃, 0₄ ... dont usuellement chacune couvre sans subdivision l'ensemble de la largeur utile de détection. A l'intérieur de chaque plage, le programme provoque la recherche des anomalies du signal J par une suite convenable de traitements de type direct puis différentiel, intégral ... sur les valeurs numérisées J de ce signal. Les méthodes utilisables sont classiques et elles échappent au cadre de l'invention : il suffira ici de fournir le schéma général d'organisation de la machine, sous forme de la figure 7, en indiquant que l'on opère ligne par ligne puis d'une ligne à l'autre sur des aires élémentaires successives, à partir de seuils déterminés eux aussi par apprentissage mais généralement communs à toute une série de lignes successives on ; caractérise ainsi par récurrence l'existence des défauts et leur intensité puis, travaillant sur ces données élémentaires, leur forme, leur surface et leur nature. Sensibilité de mesure comme algorithme de calcul permettant d'identifier présence d'une anomalie q puis existence et nature d'un défaut Q peuvent bien entendu varier d'un article à l'autre et même d'une plage à l'autre en fonction des besoins.

Le microordinateur comprend une unité centrale 30 dotée de périphériques adéquats (clavier 18, console à écran 19, mémoire à disque, imprimante). Permettant d'entrer et sortir aussi bien les données du programme ou les résultats d'examen que des images des articles et agissant sur des commandes diverses : verrou et espaceur, éjecteur, alarmes ... mais aussi éclairage des écrans ou vitesses du convoyeur et des rotateurs, et bien entendu cycle de fonctionnement des récepteurs.

Formée d'une carte de gestion (de référence MTR 186A, employant un microprocesseur de type Intel 80186), cette unité centrale 30 gère en parallèle les trois postes de contrôle, dont les circuits électroniques sont identiques : un seul est donc entièrement schématisé sur la figure.

Chaque circuit est organisé autour d'une carte calculatrice de synthèse 31 (de référence MTR 186B). Il possède une carte d'examen 32, en relation avec les cartes de commande 33 de la caméra et 34 du miroir auxquelles elle relaie article après article le programme d'examen. Ligne après ligne et selon les instructions du programme, la carte 31 crée et place le créneau [C] ou plus exactement recale les adresses i des cellules sur ce créneau mobile avec l'article. La carte 32 recueille les données lumineuses J numérisées par la carte 33, relève les transitions extrêmes et transmet les données dimensionnelles correspondantes ; elle engendre ainsi, cadré dans la grille [F], le signal constitutif de l'image de chaque objet.

Le traitement de cette image peut alors s'effectuer de façon normale dans le reste du circuit : la carte 32 transmet les données à des cartes de traitement parallèles 35a (amplitudes et différentiations), 35b (enveloppes et moyennes) ... 35m (gestion des données de référence) pour élaborer des écarts qa, qb ... à l'intérieur de chaque ligne puis de celle-ci aux voisines. Une carte d'analyse 36 gère ces écarts par ordre de priorités décroissantes a, b ..., permettant d'élaborer de proche en proche en fonction du programme d'analyse choisi les informations de dimensions et les informations d'anomalies q à retenir finalement pour caractéristiques ponctuelles à l'intérieur d'une grille homologue [G] fournissant l'image B conforme de l'article.

Données dimensionnelles et le cas échéant type, amplitude et signe des grandeurs caractéristiques q en regard de leurs coordonnées x, y sont alors repris par la carte de synthèse 31 affectée au poste considéré. Cette carte en effectue le regroupement sur des aires élémentaires successives de 4 x 4 mailles, pour engendrer les informations de défauts requises Q : intensité, surface, direction à l'intérieur de la grille d'examen du poste, donc nature et gravité.

Le microprocesseur 30 est alors en mesure de regrouper et d'interpréter les données homologues recueillies et, à travers une carte de commande 37, de déclencher les actions nécessaires.

## Revendications

1. Procédé de contrôle par voie optique d'objets suffisamment transparents, en particulier d'articles tels que des bouteilles ou flacons en verre ou matières plastiques, en déplacement devant un émetteur fixe fournissant un fond clair en face duquel se trouve un récepteur formant des objets une image lue par combinaison d'une exploration électronique rapide "horizontale" effectuée par lignes disposées dans la direction du mouvement de l'article et, transversalement, d'un balayage "vertical" plus lent, caractérisé en ce que l'exposition s'effectue aussi séquentiellement, ligne par ligne (u), et que l'ensemble du balayage (v) couvre une part majeure de la période de passage.

2. Procédé selon la revendication 1, caractérisé en ce que le balayage "vertical " est optique.

3. Procédé selon l'une des revendications 1 et 2, caractérisé en ce que les articles, entraînés sur une file, sont examinés au vol, espacés mais sans rotation au cours de leur examen.

4. Procédé selon la revendication 3, caractérisé en ce que le bord des articles le plus proche de l'émetteur est aligné sur le bord correspondant de leur tranporteur.

5. Procédé selon l'une des revendications 3 et 4, caractérisé en ce que le balayage "vertical" est commandé selon un programme déterminé par les opérateurs et que ce programme est déclenché par le passage même des articles.

6. Procédé selon la revendication 5, caractérisé en ce que les articles sont examinés un par un, par lignes entières, avec création électronique d'un créneau d'examen ([C]) qui encadre et accompagne chacun tour à tour et dont les données de lecture sont recalées en fonction du déplacement sur une grille d'analyse rectangulaire ([F]).

7. Procédé selon la revendication 6, caractérisé en ce que, pour l'analyse des anomalies provoquées par l'existence de défauts ponctuels, on efface systématiquement les données fournies par des nombres choisis de pixels extrêmes, qui correspondent aux zones marginales des articles.

8. Dispositif de contrôle optique sur un transporteur, associant de part et d'autre de la piste de celui-ci un émetteur à éclairement réparti (21) et un récepteur (22) équipé d'une caméra électronique matricielle dont les cellules photoélectriques sont lues par combinaison d'une exploration rapide "horizontale", effectuée par lignes (u) disposées dans la direction du mouvement (x) créé par le transporteur et, transversalement, d'un balayage "vertical" (v) plus lent, caractérisé en ce que leur exposition s'effectue aussi séquentiellement, ligne par ligne, et que l'ensemble du balayage couvre une part majeure de la période de passage.

9. Dispositif selon la revendication 8, caractérisé par l'incorporation au récepteur d'optiques auxiliaires subdivisant son champ de vision ([UV]) pour observer diverses zones de chaque article sous des angles indépendants.

10. Dispositif selon la revendication 8, dont la caméra est une caméra à réseau linéaire, caractérisé en ce que, sa rangée (23a) de cellules étant disposée en direction "horizontale", le récepteur, en direction "verticale", combine la caméra avec un système optique de balayage transversal.

11. Dispositif selon la revendication 10, caractérisé en ce que le système optique comprend un organe pivotant (24) dont l'arbre (24a) est mû par un mécanisme programmable.

12. Dispositif selon la revendication 11, caractérisé en ce que ledit mécanisme est un galvanomètre (25) à cadre mobile alimenté sous une tension réglable à partir d'un diviseur de tension à commande numérique.

13. Dispositif selon la revendication 11, caractérisé en ce que l'organe pivotant est un miroir plan constituant le seul organe mobile du récepteur.

14. Dispositif selon l'une des revendications 8 à 13, caractérisé en ce que le transporteur est un convoyeur à tablier horizontal (4) sur lequel le champ horizontal du récepteur couvre une largeur (U) proche de 2,5 fois la largeur apparente (d) des articles, un cycle de contrôle étant déclenché à chaque passage d'un article dans une position déterminée par un détecteur de référence (b) visant une hauteur donnée (a) proche du tablier du convoyeur.

15. Dispositif selon la revendication 14, à caméra linéaire, caractérisé en ce que le détecteur de référence appartient à la rangée de cellules de la caméra et que le cycle est déclenché à partir d'une position de référence de l'organe de balayage du système optique.

16. Dispositif selon la revendication 14, caractérisé en ce qu'il est géré en temps réel par un microordinateur (30) et qu'une horloge de synchronisation provoque exploration et balayage, ainsi que création et glissement d'un créneau d'examen ([C]) devant les cellules à la vitesse moyenne (w) du convoyeur pour constituer de chaque article une image finale B qui sera exploitée par cet ordinateur.

17. Dispositif selon la revendication 16, caractérisé en ce que la courbe (C) représentatrice du cycle de balayage présente une portion ascendante aveugle (c₂) puis plusieurs descendantes (c₄ ...), de pente moins accentuée pour l'inspection des défauts locaux, et qui relient un certain nombre de paliers (c₁ ...) de mesures dimensionnelles.

18. Dispositif selon la revendication 17, caractérisé en ce que, sur un palier, la mesure dimensionnelle résulte de la moyenne d'un certain nombre de relevés au cours de l'ensemble desquels le glissement global correspond à un nombre entier de mailles de la chaîne formée par les cellules (i).

19. Machine associant, à des postes successifs, plusieurs dispositifs (1,2,3) selon l'une des revendications 8 à 18, caractérisée en ce que l'ensemble du système optique de chaque poste possède un plan de symétrie ([V]) perpendiculaire à la direction (x) de la piste du transporteur.

20. Machine selon la revendication 19, caractérisée en ce que ses postes sont disposés le long d'un transporteur à convoyeur rectiligne et qu'ils sont séparés par des rotateurs (11,12).

21. Machine selon la revendication 19, caractérisée en ce que les organes de visée des récepteurs sont placés à des hauteurs différentes d'un poste à l'autre.

## Patentansprüche

1. Verfahren zur optischen Kontrolle von ausreichend transparenten Objekten, insbesondere von Gegenständen wie Flaschen oder Fläschchen aus Glas oder Kunststoff, durch Bewegen vor einer festen Lichtquelle, welche einen hellen Hintergrund bildet, demgegenüber sich ein Sensor befindet, welcher von den Objekten ein Abbild erzeugt, das durch Kombination einer schnellen "horizontalen" elektronischen Abtastung, die in Zeilen erfolgt, welche in der Bewegungsrichtung des Gegenstandes liegen, und quer dazu einer langsameren "vertikalen" Ablenkung ausgelesen wird, dadurch gekennzeichnet, daß die Exposition ebenfalls sequentiell erfolgt, und zwar Zeile für Zeile (u), und daß die gesamte Ablenkung (v) einen Großteil der Vorbeibewegungsperiode abdeckt.

2. Verfahren nach Anspruch 1, dadurch gekennzeichnet, daß die "Vertikal"-Ablenkung optisch ist.

3. Verfahren nach einem der Ansprüche 1 und 2, dadurch gekennzeichnet, daß die Gegenstände, die in einer Reihe angetrieben werden, "im Flug" untersucht werden, und zwar in gegenseitigem Abstand liegend, aber ohne Drehung während ihrer Untersuchung.

4. Verfahren nach Anspruch 3, dadurch gekennzeichnet, daß der Rand der Gegenstände, welcher der Lichtquelle am nächsten liegt, mit der entsprechenden Kante ihrer Transporteinrichtung ausgerichtet wird.

5. Verfahren nach einem der Ansprüche 3 und 4, dadurch gekennzeichnet, daß die "Vertikal"-Ablenkung gemäß einem Programm gesteuert wird, das von den Bedienungspersonen vorgegeben wird, und daß dieses Programm durch die Vorbeibewegung der Gegenstände selbst ausgelöst wird.

6. Verfahren nach Anspruch 5, dadurch gekennzeichnet, daß die Gegenstände einzeln in ganzen Zeilen untersucht werden, wobei ein elektronisches Untersuchungsfenster ([C]) erzeugt wird, welches jeden Gegenstand abwechselnd umgibt und begleitet und dessen Auslesedaten als Funktion der Verschiebung auf einem rechteckigen Analysegitter ([F]) dargestellt werden.

7. Verfahren nach Anspruch 6, dadurch gekennzeichnet, daß zur Analyse von Anomalien, die durch die Anwesenheit von punktuellen Fehlerstellen hervorgerufen werden, die von einer gewählten Anzahl von Randpixeln gelieferten Daten systematisch gelöscht werden, welche den Randzonen der Gegenstände entsprechen.

8. Vorrichtung zur optischen Kontrolle bei einer Transporteinrichtung, mit einer verteilten Lichtquelle (21) auf der einen Seite der Förderbahn der Transporteinrichtung und einem Sensor (22) auf der anderen Seite der Förderbahn, der mit einer elektronischen Matrixkamera ausgestattet ist, deren photoelektrische Zellen durch die Kombination einer schnellen "horizontalen"-Abtastung, die in Zeilen (u) erfolgt, welche in der von der Transporteinrichtung erzeugten Bewegungsrichtung (x) angeordnet sind, und quer dazu einer langsameren "Vertikal"-Abtastung (v) ausgelesen werden, dadurch gekennzeichnet, daß ihre Exposition ebenfalls sequentiell erfolgt, und zwar Zeile für Zeile, und daß die Vertikal-Ablenkanordnung einen Großteil der Vorbeibewegungsperiode abdeckt.

9. Vorrichtung nach Anspruch 8, dadurch gekennzeichnet, daß der Sensor Hilfsoptiken enthält, welche sein Blickfeld ([UV]) unterteilen, um verschiedene Zonen jedes Gegenstandes unter unabhängigen Winkeln zu beobachten.

10. Vorrichtung nach Anspruch 8, deren Kamera eine Linearmatrixkamera ist, dadurch gekennzeichnet, daß ihre Zellenreihe (23a) in der "horizontalen" Richtung liegt, wobei der Sensor, der in der "vertikalen" Richtung liegt, die Kamera mit einem optischen System zur Querablenkung kombiniert.

11. Vorrichtung nach Anspruch 10, dadurch gekennzeichnet, daß das optische System ein Schwenkorgan (24) aufweist, dessen Achse (24a) durch einen programmierbaren Mechanismus angetrieben ist.

12. Vorrichtung nach Anspruch 11, dadurch gekennzeichnet, daß dieser Mechanismus ein Galvanometer (25) mit beweglichem Rahmen ist, das mit einer Spannung angesteuert ist, welche ausgehend von einem numerisch gesteuerten Spannungsteiler regelbar ist.

13. Vorrichtung nach Anspruch 11, dadurch gekennzeichnet, daß das Schwenkorgan ein ebener Spiegel ist, welcher das einzige bewegliche Organ des Sensors bildet.

14. Vorrichtung nach einem der Ansprüche 8 bis 13, dadurch gekennzeichnet, daß die Transporteinrichtung eine Fördereinrichtung mit einer horizontalen Auflagefläche (4) ist, auf welcher das horizontale Blickfeld des Sensors eine Breite (U) von annähernd dem 2,5-fachen der scheinbaren Breite (d) der Gegenstände bedeckt, wobei der Kontrollzyklus jeweils beim Übertritt eines Gegenstandes in eine vorgegebene Position von einem Bezugsdetektor (b) ausgelöst wird, welcher auf eine gegebene Höhe (a) nahe der Auflagefläche der Fördereinrichtung zielt.

15. Vorrichtung nach Anspruch 14 mit einer Linearkamera, dadurch gekennzeichnet, daß der Bezugsdetektor zur Zellenreihe der Kamera gehört und daß der Zyklus ausgehend von einer Bezugsposition des Ablenkorganes des optischen Systemes ausgelöst wird.

16. Vorrichtung nach Anspruch 14, dadurch gekennzeichnet, daß sie in Echtzeit von einem Mikrocomputer (30) gesteuert ist und daß ein Synchronisationstaktgeber die Abtastung und Ablenkung sowie die Erzeugung und das Verschieben eines Untersuchungsfensters ([C]) vor den Zellen mit der mittleren Geschwindigkeit (w) der Fördereinrichtung bewirkt, um von jedem Gegenstand ein endgültiges Abbild B zu bilden, das von diesem Computer ausgewertet wird.

17. Vorrichtung nach Anspruch 16, dadurch gekennzeichnet, daß die Kurve (C), welche den Ablenkzyklus darstellt, einen "blinden" ansteigenden Abschnitt (c₂) und anschließend mehrere schwächer abfallende Abschnitte (c₄ ...) für die Untersuchung lokaler Fehlerstellen aufweist, die eine bestimmte Anzahl von Stufen für Dimensionsmessungen (c₁ ...) verbinden.

18. Vorrichtung nach Anspruch 17, dadurch gekennzeichnet, daß sich auf einer Stufe die Dimensionsmessung aus dem Mittelwert einer bestimmten Anzahl von Ablesungen ergibt, während deren Gesamtzeit die Gesamtverschiebung einer Ganzzahl von Schritten der von den Zellen (i) gebildeten Kette entspricht.

19. Maschine mit mehreren Vorrichtungen (1, 2, 3) nach einem der Ansprüche 8 bis 18 in aufeinanderfolgenden Stationen, dadurch gekennzeichnet, daß das gesamte optische System jeder Station eine Symmetrieebene ([V]) besitzt, die senkrecht zur Richtung (x) der Förderbahn der Transporteinrichtung liegt.

20. Maschine nach Anspruch 19, dadurch gekennzeichnet, daß ihre Stationen entlang einer Transporteinrichtung mit geradliniger Fördereinrichtung angeordnet und durch Verdreheinrichtungen (11, 12) getrennt sind.

21. Maschine nach Anspruch 19, dadurch gekennzeichnet, daß die Zielorgane der Sensoren verschiedener Stationen auf verschiedenen Höhen angeordnet sind.

## Claims

1. A method of testing, by optical process, sufficiently transparent objects, in particular articles soch as bottles or flasks of glass or plastics materials, in movement in front of a fixed emitter providing a clear background, opposite which is situated a receiver forming from the objects an image read by combination of a "horizontal" rapid electronic exploration carried out by lines disposed in the direction of movement of the article and, transversely, a slower "vertical" scan, characterized in that the exposure also takes place sequentially, line by line (u), and that the whole of the scan (v) covers a greater part of the period of passage.

2. A method according to Claim 1, characterized in that the "vertical" scan is optical.

3. A method according to one of Claims 1 and 2, characterized in that the articles, entrained in a line, are inspected while in movement, spaced apart but without rotation during their inspection.

4. A method according to Claim 3, characterized in that the edge of the articles nearest to the emitter is aligned to the corresponding edge of their transporter.

5. A method according to one of Claims 3 and 4, characterized in that the "vertical" scan is governed according to a programme determined by the operators, and that this programme is triggered by the passage itself of the articles.

6. A method according to Claim 5, characterized in that the articles are inspected one by one, by entire lines, with electronic creation of an inspection window ([C]) which frames and accompanies each article in torn, and the reading data from which are reset as a function of the displacement of a rectangular analysis grid ([F]).

7. A method according to Claim 6, characterized in that, for the analysis of the anomalies caused by the existence of punctiform defects, the data supplied by selected numbers of extreme pixels, which correspond to the marginal zones of the articles, are systematically erased.

8. Device for optical testing on a conveyor, associating, on opposite sides of the track of this conveyor, an emitter with distributed illumination (21) and a receiver (22) equipped with a matrix electronic camera, the photoelectric cells of which are read by combination of a rapid "horizontal" exploration,effected by lines (u) disposed in the direction of movement (x) created by the conveyor and, transversely, of a slower "vertical" scan (v), characterized in that their exposore also is effected sequentially, line by line, and that the whole of the scan covers a major part of the period of passage.

9. Device according to Claim 8, characterized by the incorporation into the receiver of auxiliary optical systems, sub-dividing its field of view ([UV]) for observing various zones of each article from independent angles.

10. Device according to Claim 8, the camera of which is a linear network camera, characterized in that, its row (23a) of cells being disposed in a "horizontal" direction, the receiver, in a "vertical" direction, combines the camera with an optical transverse scanning system.

11. Device according to Claim 10, characterized in that the optical system comprises a pivoting member (24), the shaft (24a) of which is moved by a programmable mechanism.

12. Device according to Claim 11, characterized in that said mechanism is a moving coil galvanometer (25) supplied with an adjustable voltage from a numerically controlled voltage divider.

13. Device according to Claim 11, characterized in that the pivoting member is a plane mirror constituting the only movable member of the receiver.

14. Device according to one of Claims 8 to 13, characterized in that the transporter is a horizontal table conveyor (4), on which the horizontal field of the receiver covers a width (U) approximately 2.5 times the apparent width (d) of the articles, a testing cycle being triggered at each passage of an article into a determined position by a reference detector (b) aimed at a given height (a) near the table of the conveyor.

15. Device according to Claim 14, having a linear camera, characterized in that the reference detector belongs to the row of cells of the camera and that the cycle is triggered from a reference position of the scanning member of the optical system.

16. Device according to Claim 14, characterized in that it is managed in real time by a microcomputer (30) and that a synchronization timer causes horizontal exploration and vertical scanning, and also the creation and sliding of an inspection window ([C]) in front of the cells at the mean velocity (w) of the conveyor for constituting, from each article, a final image B which will be used by this computer.

17. Device according to Claim 16, characterized in that the curve (C) representative of the vertical scanning cycle comprises a blind ascending portion (c₂) and then several descending portions (c₄ ...), of less pronounced slope for the inspection of the local defects, which (descending portions) connect together a certain number of plateaux (c₁) of dimensional measurements.

18. Device according to Claim 17, characterized in that, on a plateau, the dimensional measurement results from the mean of a certain number of readings, during the whole of which the global slip corresponds to a whole number of the horizontal mesh spacings formed by the cells (i).

19. Machine associating together, at successive stations, several devices (1, 2, 3) according to one of Claims 8 to 18, characterized in that the whole of the optical system of each station possesses a plane of symmetry ([VI) perpendicular to the direction (x) of the track of the conveyor.

20. Machine according to Claim 19, characterized in that its stations are disposed along a transporter comprising a rectilinear conveyor and that they are separated by rotators (11, 12).

21. Machine according to Claim 19, characterized in that the sighting elements of the receivers are situated at different heights from one station to another.
